# EUROPEAN PATENT SPECIFICATION

(11) **EP 2 788 622 B1**
(45) Date of publication and mention of the grant of the patent: **23.05.2018**
(21) Application number: 12753117.6
(22) Date of filing: 28.08.2012
(51) Int. Cl.: F03G 3/02, F03G 3/04

(54) **SOLID STATE MATERIAL DRIVEN TURBINE**
MIT FESTSTOFFMATERIAL ANGETRIEBENE TURBINE
TURBINE ENTRAÎNÉE PAR UNE MATIÈRE À L'ÉTAT SOLIDE

(30) Priority: 09.12.2011 GB 201121173
(43) Date of publication of application: 15.10.2014
(73) Proprietor: Montanuniversität Leoben, 8700 Leoben (AT)
(72) Inventor: PRENNER, Michael, A-8720 St. Margarethen bei Knittelfeld (AT)
(74) Representative: Dilg, Haeusler, Schindelmann Patentanwaltsgesellschaft mbH
(86) International application number: PCT/EP2012/066708
(87) International publication number: WO 2013/083303

(56) References cited:
- WO-A1-2010/041043
- WO-A2-2009/123488
- CN-A- 1 263 991
- CN-A- 1 451 863
- DE-A1-102007 042 759
- ES-A6- 2 025 886
- JP-A- 57 049 078
- JP-A- 57 173 573
- JP-A- 2004 245 070
- JP-A- 2005 264 897
- US-A- 4 100 743
- US-B1- 6 206 141

## Description

### Field of the invention

The invention relates to an energy recovering apparatus, a goods transportation arrangement, a method of recovering energy from moving solid goods of a goods transportation arrangement, and a method of use.

### Background of the invention

In many technical fields it is necessary to convey goods such as bulk materials or piece goods. For instance, goods may be moved along a first continuous conveyor such as belt conveyors, bucket conveyors, RopeCon, pneumatic conveyors or the like or for example out of a hopper, a chute or a bunker. From these devices the goods could be transferred to a further conveyor or could be discharged to a processing station, a stockpile, a lorry, a ship, a railcar or the like. Conventional goods transport systems suffer from high energy consumption.

US 6,206,141 B1 discloses a gravity motor using the potential energy of an initial mass located at a relative height. This potential energy can be converted into kinetic energy. This gravity motor comprises a storage bin able to contain a quantity of fragmented material and having a base with a first chute to take the fragmented material out of the base, a second chute with an exit and a guiding cylinder of the exit, a wheel with vanes that rotate a rotor. While rotating, each vane can collect a volume of the fragmented material and act as a torque around a central axis, thus causing the rotation of the wheel around the central axis, at a velocity corresponding to the kinetic energy of the volume of the fragmented material. The rotor comprises means for articulated fastening to a machinery part.

### Object and summary of the invention

It is an object of the invention to enable transportation of goods in an efficient way.

In order to achieve the object defined above, an energy recovering apparatus, a goods transportation arrangement, a method of recovering energy from moving solid goods of a goods transportation arrangement, and a method of use according to the independent claims are provided.

According to an exemplary embodiment of the invention, an energy recovering apparatus for recovering energy from moving solid goods of a goods transportation arrangement is provided, wherein the energy recovering apparatus comprises a goods providing interface (particularly a goods receiving interface or a goods discharging interface) configured for providing moving solid goods from a solid goods supply unit, a goods forwarding interface configured for forwarding the provided moving solid goods to a solid goods destination unit, and a turbine arranged downstream of the goods providing interface and upstream of the goods forwarding interface and being configured for being driven by energy of the moving goods so as to recover part of the energy of the moving goods. The turbine is a cross-flow turbine having a plurality of blades, wherein a continuously open cross-flow path is formed between the plurality of blades, so that the solid goods are provided at the turbine's edge and leave on the opposite side after passing a central part of the turbine.

According to another exemplary embodiment, a goods transportation arrangement for transporting solid goods is provided, the goods transportation arrangement comprising an energy recovering apparatus having the above mentioned features for recovering energy from solid goods moving along the goods transportation arrangement, wherein the solid goods supply unit is configured for supplying the moving solid goods to the goods providing interface, and wherein the solid goods destination unit is configured for receiving the moving solid goods from the goods forwarding interface.

According to a further exemplary embodiment, a method of recovering energy from moving solid goods of a goods transportation arrangement is provided, wherein the method comprises providing moving solid goods from a solid goods supply unit, forwarding the provided moving solid goods to a solid goods destination unit, and driving a turbine, which operates the solid goods between the providing (i.e. a providing interface) and the forwarding (i.e. a forwarding interface), by energy of the moving goods so as to recover part of the energy of the moving goods. The turbine is a cross-flow turbine having a plurality of blades, wherein a continuously open cross-flow path is formed between the plurality of blades, so that the solid goods are provided at the turbine's edge and leave on the opposite side after passing a central part of the turbine.

According to yet another embodiment, solid goods are used for driving a turbine for recovering energy in a goods transportation arrangement. The turbine is a cross-flow turbine having a plurality of blades, wherein a continuously open cross-flow path is formed between the plurality of blades, so that the solid goods are provided at the turbine's edge and leave on the opposite side after passing a central part of the turbine.

In the context of this application, the term "solid goods" may particularly denote a plurality of items or physical bodies in the solid state (which may be dry, moistly, humid or even wet) which are moved along a goods conveying system, particularly bulk goods and/or piece goods. For instance, the goods may be electronic members such as semiconductor chips, mechanical components such as screws, food such as nuts or even components formed of many constituents such as a toy. For example the dimension of the solid goods may be in a range between 0.1 mm and 100 cm, particularly in a range between 1 mm and 10 cm, more particularly in a range between 3 mm and 3 cm.

In the context of this application, the term "goods providing interface" may particularly denote an interface of a turbine at which the incoming goods are supplied to drive the turbine.

In the context of this application, the term "goods forwarding interface" may particularly denote an interface between the turbine and a solid goods destination unit at which the goods, after having driven the turbine, are supplied for further transportation, storing or processing.

In the context of this application, the terms "upstream" and "downstream" refer to a goods motion (or processing) direction, so that a solid good comes from an upstream position and is conveyed to a downstream position. Thus, the terms "upstream" and "downstream" relate to a certain position and indicate whether the goods approach a certain place (i.e. come from an upstream position) or move away from the place (i.e. move further in a downstream direction).

In the context of this application, the term "turbine" denotes any kind of apparatus in which the kinetic and/or potential energy of a moving medium is converted to mechanical power by the impulse or reaction of the medium with a series of buckets, paddles, or blades arrayed about the circumference of a wheel, a cylinder or the like. A turbine can be considered as a rotary apparatus actuated by the reaction or impulse or both of a medium subject to pressure and usually made with a series of curved vanes on a central rotating spindle. For instance, this turbine can generate the energy in a mechanical form and may be directly used for driving, via a mechanical drive system, a component of an arrangement such as conveyor belt. It is however also possible that the turbine is configured for generating electric energy, for instance by driving an electric conductor in a magnetic field, thereby generating electric energy due to Faraday effect.

The term "solid goods supply unit" may particularly denote any component being capable of moving the solid goods from a source position (i.e. upstream) towards the turbine. This can be, for instance, a belt conveyor, a bucket conveyor, a RopeCon, a pneumatic conveyor (such as a solid goods transport tube with a pneumatic drive) or the like.

In the context of this application, the term "solid goods destination unit" may particularly denote any arrangement capable of moving the solid goods received from the turbine away from the turbine position. However, the solid goods destination unit can also be any kind of destination which does not further move the solid goods such as a stockpile, a container, a vehicle (such as a freight vehicle), a storage yard, etc.

According to an exemplary embodiment of the invention, a solid material turbine is provided, i.e. a turbine operating in a transport line transporting goods in the solid state which solid goods (such as items, bodies, pieces or particles) serve as the medium driving the turbine. By implementing a solid particle turbine it is possible to operate a goods conveying system in an energy efficient way. Intrinsic and/or extrinsic energy included in the solid goods in view of the motion can be at least partially returned to the conveying system. It is also possible that the solid particle turbine realizes a transition of solid goods between different stages in a solid goods processing system in a very gentle way. Particularly, wear of components of the system can be reduced by such a gentle handling so that the maintenance costs of a goods transportation system can be reduced and a further reduction of the required energy can be realized. Thus, resources may be used more efficiently and the emission of carbon dioxide may be reduced.

According to exemplary embodiments, materials which are transported on any kind of continuous conveying systems and having a large energy content depending on the boundary conditions of the conveying process are treated so as to drive with their intrinsic energy a turbine or the like. At discharge and transfer points a large part of this kinetic and potential energy can be recovered to the conveying system by the turbine. The energy consumption of such a conveying system will be reduced due to the turbine. Additionally the turbine reduces the wear of the conveyor at transfer and discharge points because of a smoother and directional material transfer.

Exemplary embodiments of the invention may be implemented in many different technical fields such as, but not limited, to a conveyor (such as a belt conveyor system) for supplying a furnace (such as a blast furnace) with iron ore.

### Detailed description of embodiments of the invention

In the following, further exemplary embodiments of the energy recovering apparatus will be explained. However, these embodiments also apply to the goods transportation arrangement, the method of recovering energy from moving solid goods of a goods transportation arrangement, and the method of use.

In an embodiment, exclusively solid goods are used for recovering the energy. In other words, the goods to be processed consist only of material in the solid phase, i.e. do not comprise a fluid such as a liquid. However, alternatively, it is possible to use a mixture of solid goods and a fluid such as a liquid for recovering energy based on the turbine principle. For instance, it is possible that at least 70%, particularly at least 90% of the moving goods are in the solid phase.

In an embodiment, the turbine comprises a plurality of blades separated from one another to thereby form goods accommodation spaces (such as cup-shaped accommodation spaces or accommodation spaces with a closed bottom) between adjacent blades. The blades may be configured for being rotated (or pivoted) around a bearing (particularly around an axis of such a bearing) upon supplying the provided moving solid goods to the goods accommodation spaces. In other words, the moving solid goods may be supplied to one of the accommodation spaces in a state in which they still bear or carry kinetic energy. Consequently, the kinetic energy, if desired in combination with potential energy of the solid goods, will move the blades, thereby recovering the energy of the goods at least partly to the turbine. The kinetic energy transferred from the solid goods to the blades may then be directly transferred, as mechanical energy, to another energy-consuming component or may be converted into electric energy.

In another embodiment, the turbine is a cross-flow turbine having a plurality of blades, wherein a continuously open cross-flow path is formed between the plurality of blades. In such a cross-flow turbine, an efficient energy transfer from the solid goods to the turbine is enabled, since the solid goods interact twice with blades during their through flow through an open channel within the turbine. Unlike turbines which have axial or radial flows, in a cross-flow turbine the solid goods pass through the turbine transversely, or across the turbine blades. The solid goods are provided at the turbine's edge. After passing a runner (which may be a central part of the turbine), the solid goods leave on the opposite side. Going through the runner twice provides additional efficiency.

In an embodiment, the energy recovering apparatus comprises a generator (for instance a dynamo) configured for generating electric energy from the energy of the moving goods driving the turbine. Such an electric generator is a device that converts mechanical energy of the solid goods to electrical energy. Such a generator forces electric charge (usually carried by electrons) to flow through an external electrical circuit. The source of mechanical energy may be the (for example reciprocating or rotating) turbine. The generator may be based on the Faraday effect. For instance, moving blades driven by solid goods may move an electric conductor in a (particularly static) magnetic field, thereby inducing an electric current or an electric voltage in the electric conductor. This electric current can be stored in an accumulator or the like or may be directly used for driving an electric load. Therefore, at least a part of the mechanical energy of the moving solid goods can be converted into electric energy.

In an embodiment, the energy recovering apparatus comprises an energy feedback unit (or an energy back coupling unit) to be coupled to the turbine and being configured for supplying the recovered energy to drive at least one of the solid goods supply unit and the solid goods destination unit (which in turn drive the solid goods). In such an embodiment, the mechanical energy included in the solid goods is directly coupled to the solid goods supply unit or the solid goods destination unit (which may for instance be conveyor belts). Thus, by a direct mechanical feedback or back coupling of the recovered energy from the turbine to the respective solid goods transportation unit may allow to use the recovered energy efficiently, since no further energy consuming transformation step needs to be implemented.

In an embodiment, the energy feedback unit comprises a kinetic energy coupling system (particularly any kind of gear mechanism such as a pinion gear, a chain drive system or a belt drive system or the like), which is coupled to a turbine shaft of the turbine being rotated by the moving goods. The kinetic energy coupling system may also be coupled to a drive shaft for driving the solid goods supply unit and/or the solid goods destination unit, so that recovered kinetic energy is transferred from the turbine shaft to the drive shaft via the kinetic energy coupling system. With the provision of a chain drive system or a belt drive system, an efficient and direct back coupling of the recovered energy is possible to the solid goods supply unit, the solid goods destination unit or any other apparatus to be driven mechanically based on energy recovered from the moving goods. Via a chain, a belt or any other shaft to shaft coupling member, the kinetic energy of the turbine shaft is directly introduced to the drive shaft of the other apparatus to be driven.

In an embodiment, the energy recovering apparatus comprises a further turbine which is also arranged downstream of the goods providing interface and upstream of the goods forwarding interface. The further (or second) turbine may be configured for being driven by energy of a part of the moving goods which part does not move the (first) turbine so as to recover part of the energy of the part of the moving goods. Advantageously, the turbine and the further turbine may be mounted so as to counterrotate (i.e. to have their drive axes parallel to one another, but rotating in opposite directions) to thereby at least partially compensate a torque load acting on the turbines and other components of the apparatus. In such an embodiment, two turbines are used, wherein one turbine may be driven in one direction (for instance clockwise) and the other turbine may be driven in the other direction (for instance counterclockwise). This driving of the two turbines may be performed by using a part of the moving goods for one of the turbines and another part of the moving goods for the other one of the turbines. It is presently believed that, by counterrotating these turbines, the forces and the wear resulting from the mechanical load acting on the turbines can be significantly reduced and the energy of the solid goods can be recovered in a very efficient way. Upon implementing two counterrotating turbines, the generated torque can be at least partly compensated so that the entire machine load is relaxed. The individual turbines can also be configured smaller so that they only have to receive the half volume stream.

In an embodiment, the turbine is configured to supply the moving goods with a velocity which is synchronized to a velocity of the solid goods destination unit. For instance, the system may comprises a synchronization unit configured for controlling the turbine and the solid goods transportation unit so that the (uniform or basically uniform) velocity of the solid goods upon leaving the turbine is synchronized to the velocity of the solid goods destination unit (for instance a drive belt thereof). When the solid goods are in a solid goods accommodation volume between adjacent turbine blades close to the solid goods destination unit, the velocities may for instance deviate from one another by less than about 10%. More particularly, these two velocities may be substantially equal to one another. It has turned out that the operation of the turbine with the same speed as the speed of the solid goods destination unit has advantages in terms of energy efficiency. The reason for this is that energetic losses at the interface between turbine and solid goods destination unit is extremely small if not zero when the velocities are synchronized, and the wear can be reduced.

The energy recovering apparatus may comprise at least one guide structure (which may be straight or bent), particularly at least one guide plate, arranged laterally along at least a part of an open circumference of the turbine (particularly of a cross-flow turbine) to guide back, particularly to reflect, moving solid goods which laterally leave the cross-flow turbine back into the cross-flow turbine. By taking this measure, the yield of the system may be increased both in terms of energy recovery and loss of moving goods.

The energy recovering apparatus may be free of a deflection chute, an impact blade and/or a baffle plate. One or more of these components may be substituted by the turbine, particularly a cross-flow turbine, rendering the energy recovering apparatus more compact.

The turbine, particularly a cross-flow turbine, may have a vertical rotation axis. Alternatively, the turbine, particularly a cross-flow turbine, may have a horizontal rotation axis. Also a slanted rotation axis is possible.

In the following, further exemplary embodiments of the goods transportation arrangement will be explained. However, these embodiments also apply to the energy recovering apparatus, the method of recovering energy from moving solid goods of a goods transportation arrangement, and the method of use.

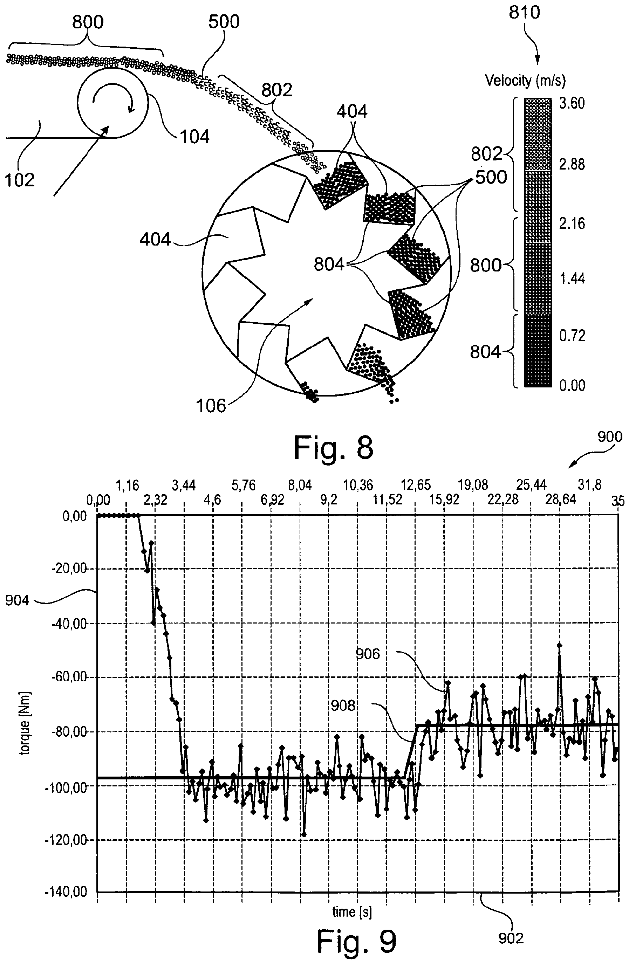

In an embodiment, the turbine is configured as an overshot turbine for a better understanding of the invention (see Fig. 8). In an overshot turbine, the solid goods are supplied at a top or at an upper portion of the turbine so as to directly impact a blade in an upper portion thereof. The solid goods then leave the turbine at a bottom or at a lower portion thereof.

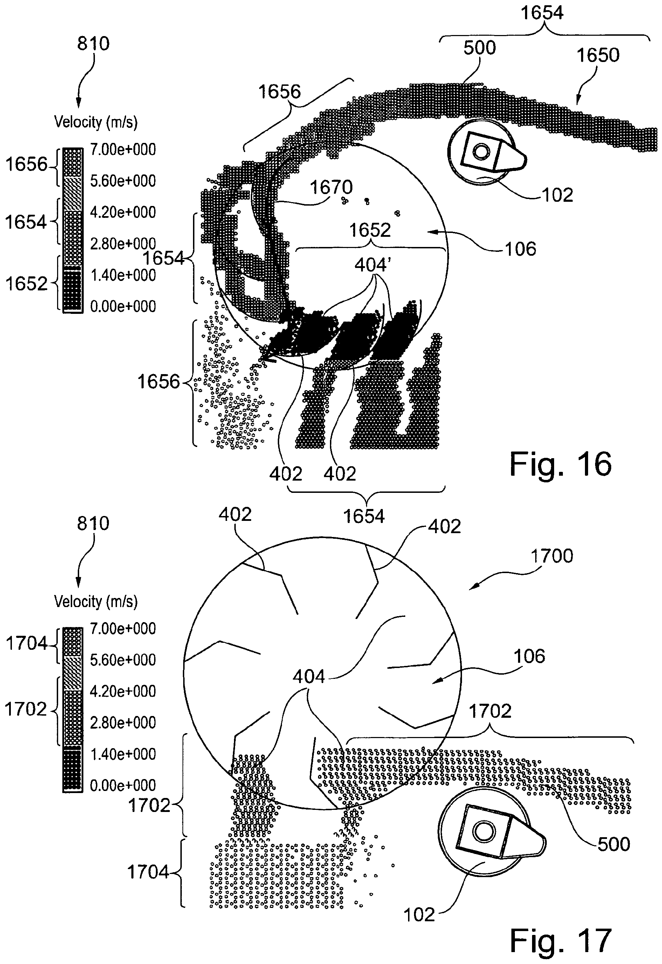

In an alternative embodiment, the turbine is configured as an undershot turbine for a better understanding of the invention (see Fig. 17). In an undershot turbine, the solid goods are supplied at a lower portion of the turbine so as to directly impact a blade in a lower portion thereof. The solid goods then leave the turbine also at a low portion of the turbine.

In an embodiment, the solid goods supply unit is a supply conveyor belt for conveying the solid goods to the energy recovering apparatus. Additionally or alternatively, the solid goods destination unit may be a destination conveyor belt for conveying the solid goods away from the energy recovering apparatus. Such a conveyor belt may comprise two or more pulleys with a continuous loop of material as belt that rotates about them. At least one of the pulleys may be powered, moving the belt and the material on the belt forward. The powered pulley is called the drive pulley while an unpowered pulley is called bend pulley or tail pulley. However, the solid goods may be handled by other technical components than a conveyor belt such as an escalator or moving stairway system. Also a sequence of multiple adjacent coaxial rotating cylinders can be used as a solid good supply or destination unit.

In an embodiment, the solid goods supply unit is located at a higher vertical level than the solid goods destination unit so that the moving solid goods fall downwardly under the influence of gravity when passing from the solid goods supply unit via the turbine to the solid goods destination unit thereby driving the turbine. In such an embodiment, the potential energy included in the solid goods can be used for driving the turbine, since the solid goods may fall from an upper vertical position to a lower vertical position, thereby transferring their potential energy at least partially to the turbine, for instance moving blades thereof.

In an embodiment, the solid goods supply unit is configured to supply the moving goods to the turbine such that kinetic energy of the moving goods is transferred for driving the turbine. When the moving particles arrive with a high velocity at the turbine, they at least partly transfer this energy to the turbine and are decelerated, thereby rotating the turbine. The particles will then be moved to the connected solid goods destination unit at which they can be accelerated again.

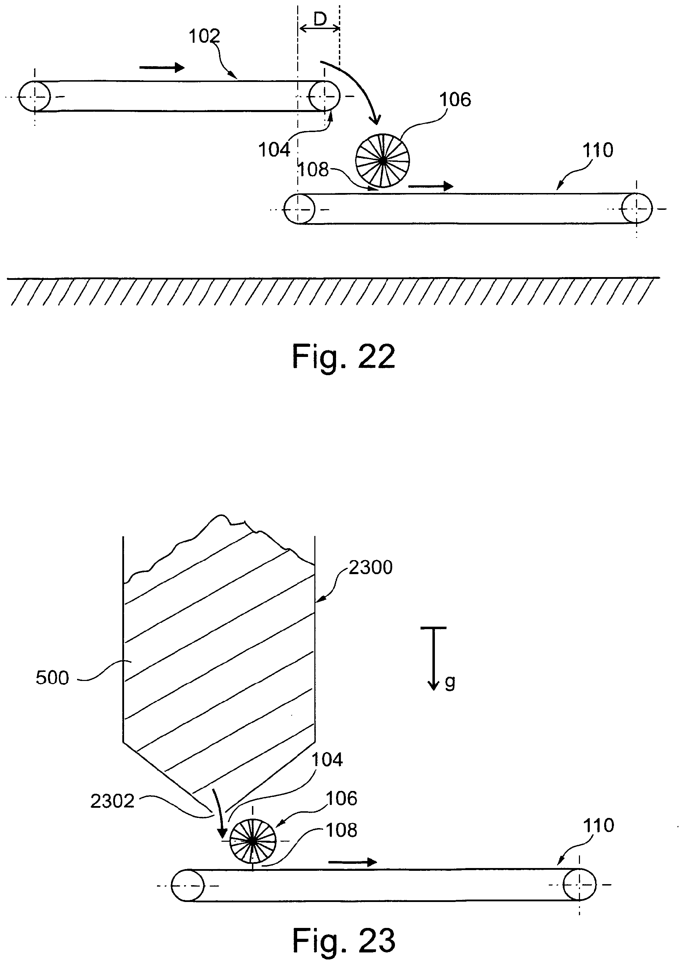

In an embodiment, the solid goods supply unit is configured to supply the moving goods to the turbine via a container having a spout for discharging the solid goods to the turbine. Such an embodiment, see for instance Fig. 23, supplies the solid goods to the turbine from a for instance vertically aligned container (a silo or the like) which may have a for instance tapering spout at a bottom of the container. Downstream of the turbine, the solid goods may then be supplied to a destination such as a continuous conveyor.

In a preferred embodiment, the goods transportation arrangement is configured as a reclaimer. A reclaimer may be denoted as a large machine used in bulk material handling applications. A reclaimer's function is to recover bulk material such as ores and cereals from a stockpile. Bucket wheel reclaimers use bucket wheels for removing material from the pile they are reclaiming. Scraper reclaimers use a series of scrapers on a chain to reclaim the material. The reclaimer structure can be of a number of types, including portal and bridge. Portal and bridge reclaimers can both use bucket wheels or scrapers to reclaim the product. Bridge type reclaimers blend the stacked product as it is reclaimed. All of these reclaimer types may be equipped with an energy recovery system of exemplary embodiments of the invention.

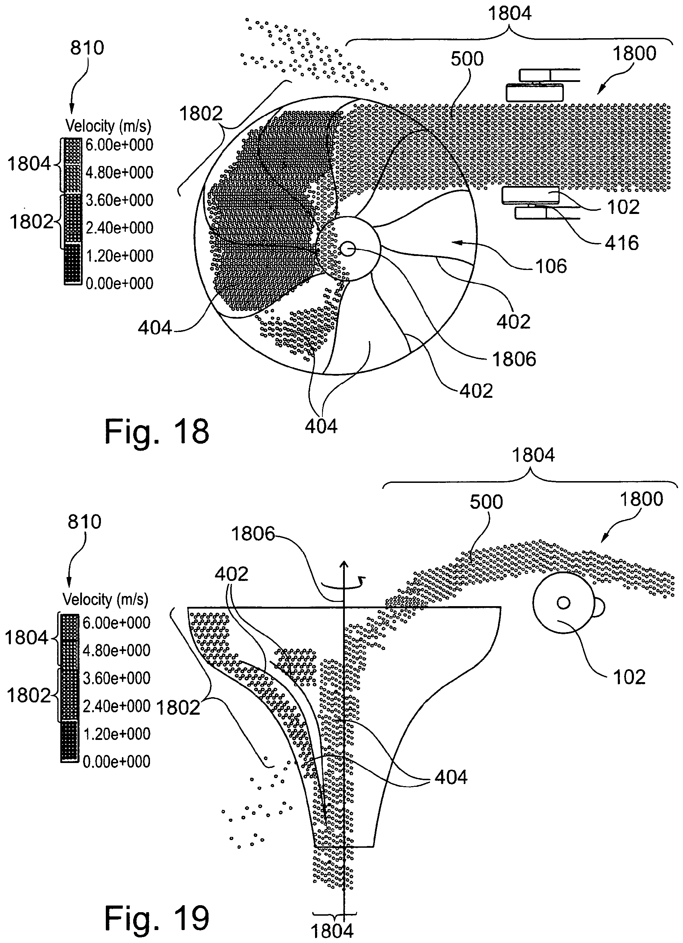

In another preferred embodiment, the goods transportation arrangement is configured as a stacker (see Fig. 19). A stacker (for instance a belt stacker) is a device which transports solid goods to a destination, for instance by means of a belt, and lays down the solid goods at a storage place (such as a stockpile).

It is also possible to configure the goods transportation arrangement as a reclaimer-stacker combination, i.e. a system having both a reclaimer and a stacker.

The turbine may be arranged to reduce wear at transfer and discharge points from the solid goods supply unit (such as a conveyor) and/or to the solid goods destination unit (such as another conveyor) and/or at a deflection chute as a result of a smooth and directional transfer of the moving solid goods. For this purpose, the turbine may be arranged relative to one or more of these components so that the moving goods are transferred continuously between turbine and the respective component to prevent or suppress forces acting on the component at the material interface.

In the following, further exemplary embodiments of the method of recovering energy from moving solid goods of a goods transportation arrangement will be explained. However, these embodiments also apply to the energy recovering apparatus, the goods transportation arrangement, and the method of use.

In an embodiment, the solid goods are bulk goods or piece goods. Examples for bulk goods are sand, stone, coal, ore, a granulate, rice, polymer powder, or any other kind of solid loose material. Individually traded piece goods are pieces which are technically used individually, such as screws, valves, batteries, postal packages or the like.

### Brief description of the drawings

The invention will be described in more detail hereinafter with reference to examples of embodiment but to which the invention is not limited:
Fig. 1 to Fig. 3 show solid goods transportation arrangements having an energy recovering apparatus according to exemplary embodiments of the invention.
Fig. 4 shows a solid particle turbine for a better understanding of the invention.
Fig. 5 shows a detail of the solid particle turbine of Fig. 4 in operation for a better understanding of the invention.
Fig. 6 and Fig. 7 are diagrams comparing the energy consumption of a drop conveyor with and without a turbine for a better understanding of the invention.
Fig. 8 shows a scheme of a turbine including a simulation of its operation for a better understanding of the invention.
Fig. 9 is a diagram illustrating a torque of the turbine of Fig. 8 at two different revolution speeds for a better understanding of the invention.
Fig. 10 shows a time dependency of torque for different turbine geometries at different revolution speeds of a reclaimer for a better understanding of the invention.
Fig. 11 shows an example for a deflection chute for transferring solid goods from one conveying belt to another one.
Fig. 12 to Fig. 14 illustrate energy recovering apparatuses with turbines for a better understanding of the invention.
Fig. 15 illustrates a directed material transfer by means of an inclined solid particle turbine according to yet another exemplary embodiment of the invention.
Fig. 16 illustrates an energy recovering apparatus with turbines according to another exemplary embodiment of the invention.
Fig. 17 to Fig. 19 illustrate energy recovering apparatuses with turbines for a better understanding of the invention.
Fig. 20 to Fig. 23 illustrate goods transportation arrangements according to other exemplary embodiments of the invention.
Fig. 24 illustrates examples of applying embodiments of the invention to various technical scenarios.
Fig. 25 illustrates an energy recovering apparatus with a cross-flow turbine according to another exemplary embodiment of the invention.
Fig. 26 illustrates a dependency between time and torque of the cross-flow turbine of Fig. 25.

### Detailed description of the drawings

The illustrations in the drawings are schematically. In different drawings similar or identical elements are provided with the same reference signs.

Moved masses of continuous conveying apparatuses have a remarkable and significant energy content. Embodiments of the invention recover a major part of this energy at transition or dropping positions of such solid goods. This principle can be applied to both bulk goods transportation as well as piece goods transportation. In the following, exemplary embodiments will be described showing the function of the energy recovery system of solid particles. A solid particle turbine of an embodiment of the invention can be arranged at any appropriate position so as to recover the kinetic and/or potential energy intrinsically contained in the conveyed goods to a sufficiently large part in form of electric or mechanical energy. For this purpose, a turbine in combination with a goods conveying system may be implemented, wherein the invention uses solid bodies as a medium for driving the turbine.

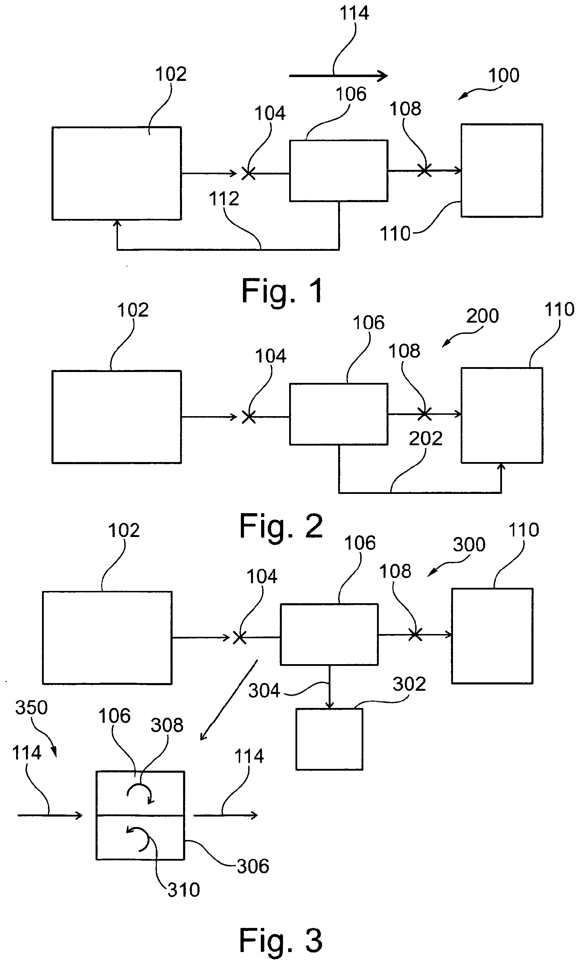

**Fig. 1** illustrates a solid goods transportation arrangement 100 for transporting solid goods within a conveying line or a production line (along which the solid goods are subject of several processing steps at various processing stages during solid goods manufacture) according to a first exemplary embodiment of the invention. This goods transportation arrangement 100 comprises a solid goods supply unit 102 configured for supplying moving solid goods (not shown in Fig. 1) to a goods providing interface 104. For instance, the solid goods supply unit 102 is a conveyor belt and the moved goods are bulk goods such as a granulate. It is also possible that the solid goods are piece goods such as packages, boxes, bags, or the like. The moving goods are hence supplied to an energy recovering apparatus which is formed by the goods providing interface 104, a goods forwarding interface 108 and a turbine 106 arranged between the interfaces 104, 108. Downstream of the goods forwarding interface 108, a solid goods destination unit 110 is arranged which receives the moving solid goods from the goods forwarding interface 108 and transports them away for further processing or the like.

The energy recovering apparatus of Fig. 1 is configured for recovering energy from the moving solid goods of the goods transportation arrangement 100. For this purpose, the moving solid goods are received at the goods providing interface 104 from the solid goods supply unit 102. The turbine 106, which is arranged downstream of the goods providing interface (wherein the term downstream is related to a general goods moving direction 114) and upstream (wherein the term upstream is related to the general goods moving direction 114) of the goods forwarding interface 108, is configured to be at least partially driven by energy of the moving goods so as to recover or recycle at least a part of the energy of the moving goods. In other words, the kinetic and/or potential energy of the moving goods can be used for driving the turbine 106 (which may or may not, in addition, have a turbine drive such as an electric motor or a combustion motor). Fig. 1 further shows that the turbine 106 is energetically coupled with the solid goods supply unit 102 by means of a energy feedback line 112 (which may be a purely mechanical or an electric coupling line) so as to deliver the recovered energy to the solid goods supply unit 102 to drive it at least partially based on this energy (solid goods supply unit 102 may in addition have a solid goods supply drive such as an electric motor or a combustion motor). For instance, if the solid goods supply unit 102 is a conveyor belt, a shaft of the conveyor belt can be driven with the kinetic energy of the turbine. Alternatively, the kinetic energy of the turbine 106 may be converted into electric energy, and the recovered electric energy may be used for driving the solid goods supply unit 102. This may render the recovered energy usable for other kinds of driving than to provide mechanical energy. For instance, such an energy may be used for heating, powering a processor, etc.

**Fig. 2** shows a solid goods transportation arrangement 200 according to another exemplary embodiment of the invention. The goods transportation arrangement 200 differs from the goods transportation arrangement 100 in that the feedback line 112 is substituted by another feedback line 202 feeding the recovered energy from the turbine 106 to the solid goods destination unit 110 rather than to the solid goods supply unit 102.

Although Fig. 1 shows a feedback or back coupling of the recovered energy to the solid goods supply unit 102 only and Fig. 2 shows a feedback or back coupling of the recovered energy to the solid goods destination unit 110 only, still a further exemplary embodiment of the invention may feed back the energy in parts to both of units 102, 110 so that also both feedback lines 112, 202 may be present in such an embodiment. The recovered energy may then be distributed in a fixed or variable manner to units 102, 110.

**Fig. 3** shows a solid goods transportation arrangement 300 according to another exemplary embodiment of the invention. The solid goods transportation arrangement 300 differs from the solid goods transportation arrangements 100, 200 in that no feedback lines 112, 202 are provided in Fig. 3. In contrast to this, a generator of the turbine 106 may convert the kinetic and/or potential energy of the moving goods into electric energy. The recovered electric energy may then be conducted electrically, for instance via an electric connection line 304, in the form of an electric current to an electric member 302 requiring the electric energy for being operated. It is also possible that the recovered electric energy is fed in an electric network (such as a mains supply). Additionally or alternatively, the goods transportation system 300 may also have at least one of the feedback lines 112, 202 so as to provide units 102 and/or 110 with at least a part of the recovered electric energy.

A detail 350 of Fig. 3 shows a turbine arrangement of a preferred embodiment of the invention. In this alternative, not only one turbine 106 is provided, but a further turbine 306 is provided as well. The solid goods moving along the goods transportation direction 114 can be supplied to both turbines 106, 306. More precisely, a part of the moving goods drives the first turbine 106, wherein another part the moving goods drives the other turbine 306 for recovering energy from both parts of the solid goods. The first turbine 106 is arranged so that it rotates in a clockwise direction upon supply with solid goods, see reference numeral 308. In contrast to this, the second turbine 306 rotates in a counterclockwise direction upon supply with solid goods, see reference numeral 310. By rotating the turbines 106, 306 in opposite or inverse directions with respect to one another, the torque load acting on turbines 106, 306 may be reduced. Therefore, the wear of the turbine arrangement resulting from the mechanical load acting thereon can be significantly reduced.

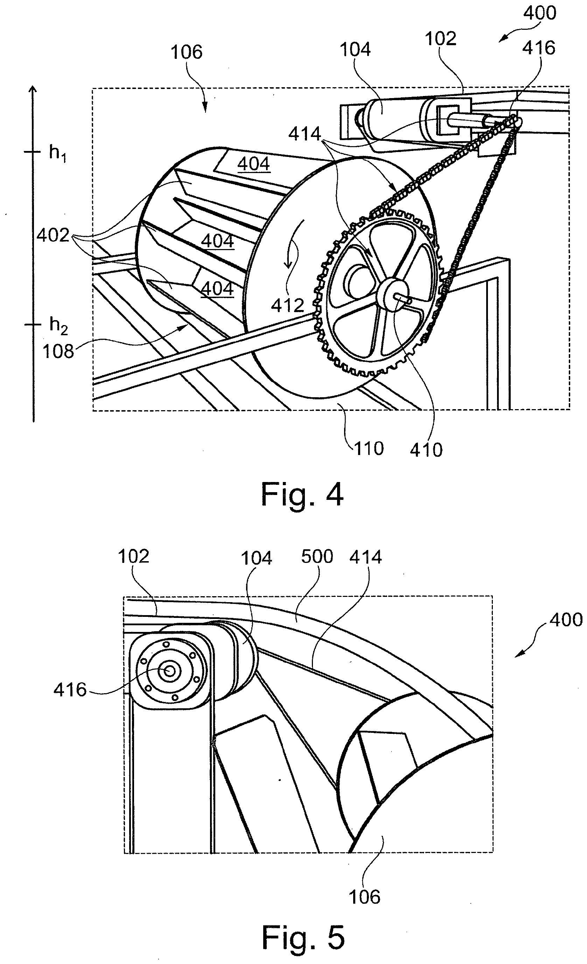

**Fig. 4** shows a solid goods transportation arrangement 400 for a better understanding of the invention. It can be seen in Fig. 4 that the turbine 106 comprises a plurality of circumferentially distributed blades 402. Each pair of adjacent blades 402 encloses a respective one of multiple circumferentially distributed solid goods accommodation spaces 404 each of which being capable of receiving and accommodating solid goods in operation. The blades 402 and the goods accommodation spaces 404 are rotated around a turbine shaft 410 upon supplying moving solid goods from a conveyor belt 102 via a supply interface 104 which is spatially arranged for dropping the solid goods into the accommodation spaces 404. This forces the turbine 106 to rotate in a direction 412 indicated in Fig. 4.

As can further be taken from Fig. 4, the goods transportation system 400 comprises an energy feedback unit coupled to the turbine 106 and being configured for supplying the recovered energy to drive the solid goods supply unit, i.e. the conveyor belt 102. For this purpose, the energy feedback system comprises a chain drive system 414 which is coupled to the turbine shaft 410 of the turbine 106 being rotated by the moving solid goods. The chain drive system 414 furthermore drives the conveyor belt 102 forming the solid goods supply unit. Therefore, the recovered energy, i.e. the kinetic energy of the driven turbine 106, is transferred directly from the turbine shaft 410 to a drive shaft 416 of the conveyor belt 102 to drive the drive shaft 416 via the chain drive system 414. This is a very efficient way of recovering the energy.

In the energy recovery system of Fig. 4, the turbine 106 is installed at a transitional position between one conveyor belt 102 and another conveyor belt 110. The bulk goods thrown off from the first conveyor belt 102 at a position indicated by reference numeral 104 are received by the rotating solid particle turbine 106 and are supplied, after energy recovery, to the lower positioned second conveyor belt 110. During this transition, the solid particles fall from a first height h1 to a lower second height h2. Therefore, not only the kinetic energy included in the moving goods being decelerated by the turbine 106 can be recovered, but also potential energy (m g (h1 - h2), m being the mass and g being the gravity acceleration constant) can be recovered. In other words, the turbine 106 converts the potential energy and the kinetic energy of the bulk goods in reusable energy. This energy is transferred by the chain drive system 414 from the turbine 106 onto the drive pulley (see drive shaft 416) of the conveyor belts 102. Hence, the energy is returned to the conveyor belt 102 throwing off the solid goods so that the drive energy needed for powering the conveyor belt 102 is significantly reduced. The skilled person understands that the turbine 106 can be coupled to a generator, and that the geometry and the position of the rotational axis of the turbine 106 as well as other design parameters can be adapted flexibly to any specific application.

**Fig. 5** shows the solid particle turbine 106 of Fig. 4 in operation for a better understanding of the invention. Furthermore, also the moving bulk goods can be seen, see reference numeral 500.

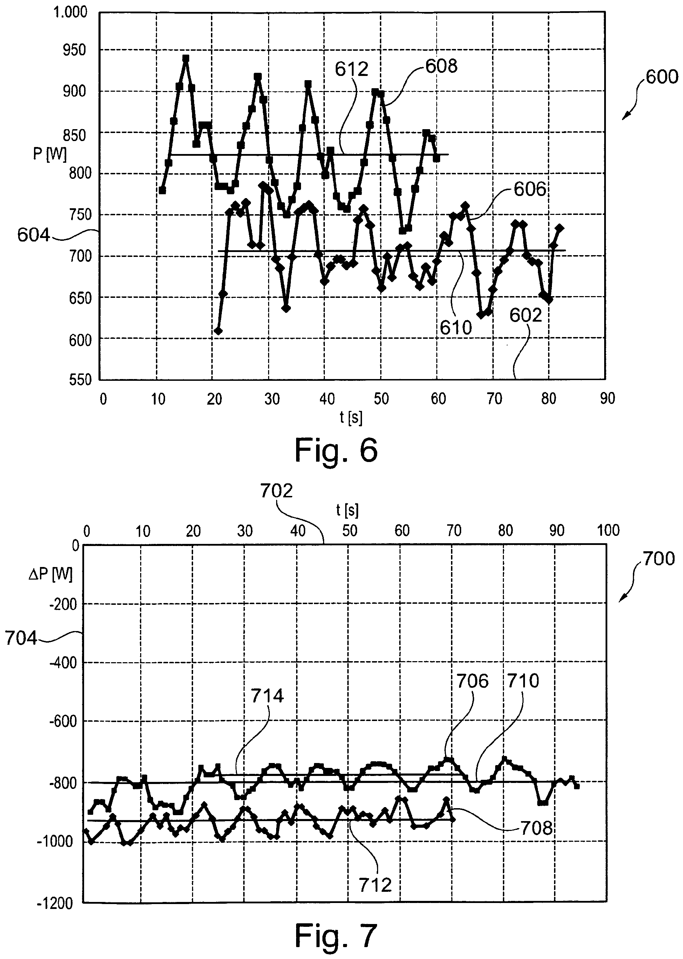

**Fig. 6** is a diagram 600 for a better understanding of the invention, having an abscissa 602 along which the time is plotted in seconds. Along an ordinate 604, the power consumption of the system is plotted. A first curve 606 shows the power consumption over time implementing the turbine 106 of Fig. 4 and Fig. 5. In contrast to this, a second curve 608 shows the energy consumption over time if no turbine is used. The average power consumption with turbine 106 is shown as a reference numeral 610, whereas the average power consumption without turbine is shown with reference numerals 612. Thus, the energy consumption can be reduced by implementing the energy recovery system of embodiments of the invention.

**Fig. 7** is a diagram 700 for a better understanding of the invention, having an abscissa 702 along which a time is plotted in seconds. Along an ordinate 704, the saved power is plotted when the mass flow of the solid goods is increased as compared to Fig. 6. A first curve 706 shows a scenario with a turbine, and reference numeral 710 relates to an average value. Curve 708 shows an embodiment without turbine, wherein reference numeral 712 again shows an average value. As can be taken from Fig. 7, the saved power is even larger in this embodiment. It is mentioned that a further curve 714 relates to a slightly different average value as compared to curve 710 which relates from an experimental artifact during the performed experiment.

**Fig. 8** shows an energy recovery system for a better understanding of the invention, which is taken as a basis for simulating the operation of the turbine 106 using a DEM (discrete element method) simulation. The velocity distribution, see reference numeral 810, of the moving goods 500 is plotted as obtained from the simulation. As long as the moving solid goods are on the conveyor belt 102, their velocity is constant, see reference numeral 800. When falling, see reference numeral 802, the velocity is increased since potential energy is converted into kinetic energy. When the solid particles 500 fall into the accommodation spaces 404, they will be decelerated and therewith drive the turbine 106. This is indicated with reference numeral 804 in the velocity plot 810.

**Fig. 9** is a diagram 900 for a better understanding of the invention, having an abscissa 902 along which a time is plotted in seconds. Along an ordinate 904, the torque acting on the turbine 106 is plotted. Curve 906 shows a time dependency of the torque. Curve reference numeral 908 shows an average value.

Fig. 8 and Fig 9 show the result of the DEM simulation of the turbine 106. The saved energy as obtained from an experiment with the system of Fig. 4 and Fig. 5 is in good approximation the same as the result from the simulation. The simulation also shows that the saved energy depends on the revolution speed of the turbine 106. Therefore, there is an optimum operation point (speed transformation pulley-turbine) which can be advantageously adjusted by a skilled person.

In the following, a discrete element method simulation of a reclaimer with a solid goods turbine will be described.

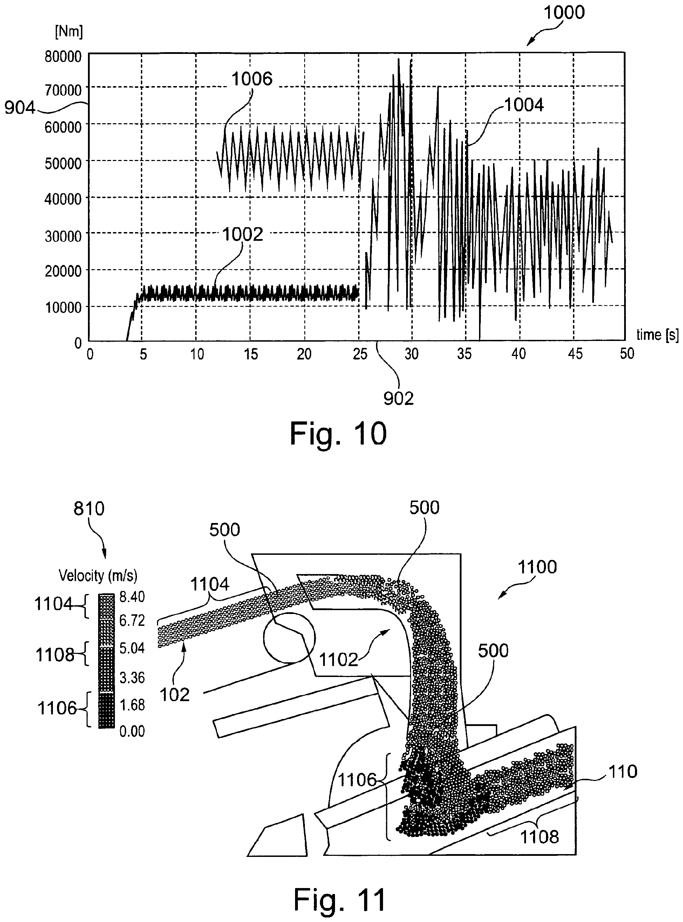

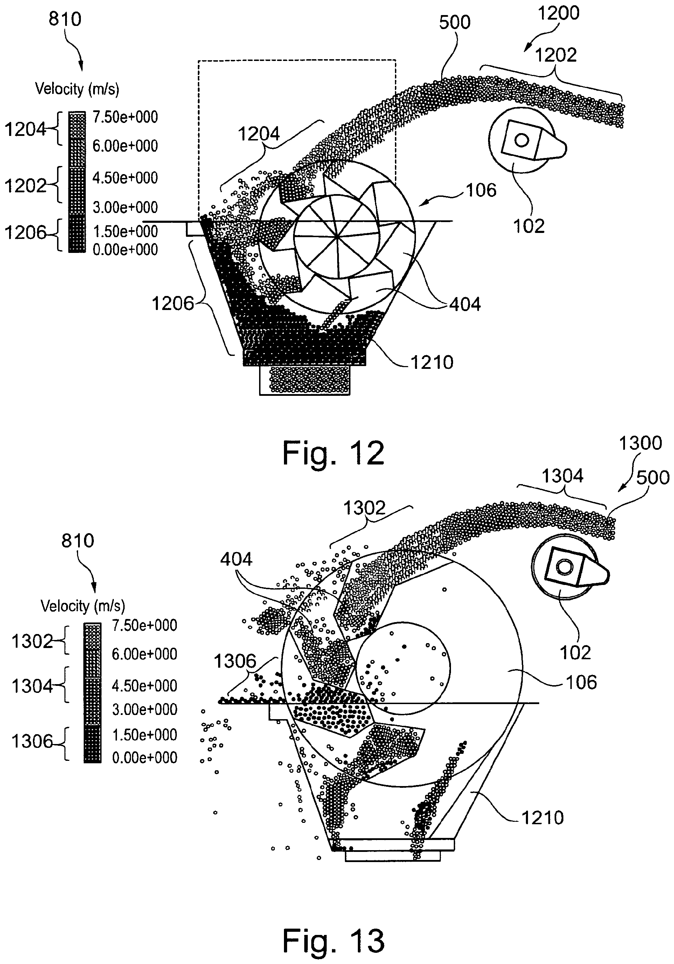

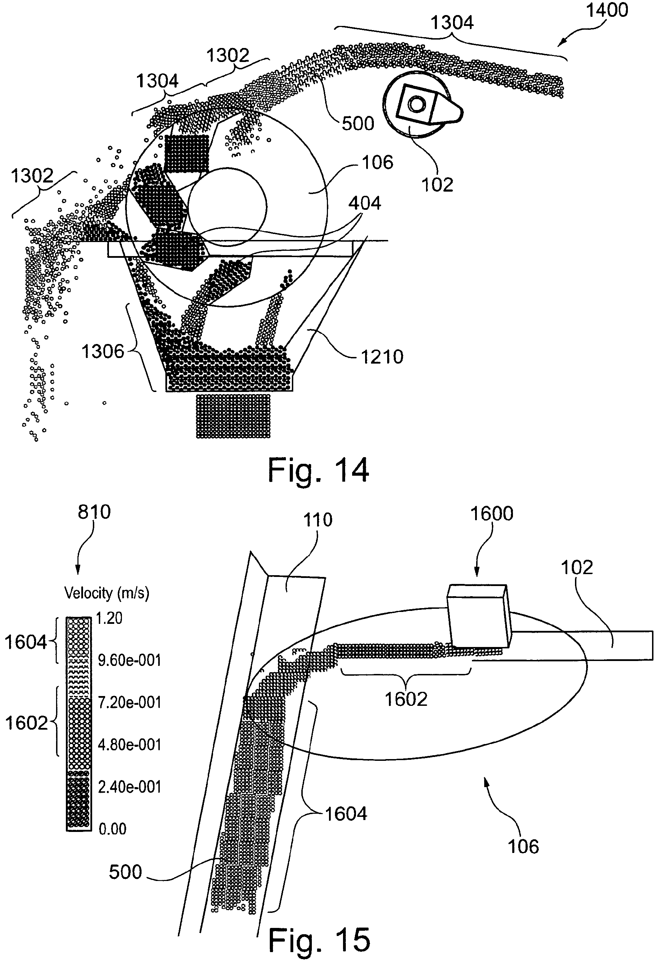

**Fig. 10** shows a diagram 1000 for a better understanding of the invention, which is similar to diagram 900 of Fig. 9 but relates to a reclaimer. A first curve 1002 relates to a small turbine (Fig. 12). A second curve 1004 relates to a larger turbine (Fig. 13). A third curve 1006 relates to a third type of turbine (Fig. 14).

**Fig. 11** is a schematic illustration of a stacker 1100 or the like. Reference numeral 1102 refers to a deflection chute. Again, a velocity plot 810 is shown. The varying velocity of the moving solid goods at the positions 1104, 1106 and 1108 are shown as well.

**Fig. 12** shows a further energy recovery system 1200for implementation in a reclaimer for a better understanding of the invention, wherein the small turbine 106 is implemented having a diameter of 2.36 m and a width of 2 m. Again, a velocity plot 810 is shown. The varying velocity of the moving solid goods 500 at the positions 1202, 1204 and 1206 is shown as well.

In order to convert a maximum of kinetic energy of the moving solid goods 500 into turbine power, it is advantageous to receive a sufficiently large amount of moving goods 500 into the accommodation spaces 404 between the blades 402 of the turbine 106. It is advantageous to completely receive the decelerated moving goods 500 between adjacent blades 402 and to completely forward the entire goods material at the lowest position of the blades 402 (therefore transferring a maximum of potential energy from the moving goods 500 to the turbine 106).

However, the turbine 106 needs to be significantly increased in size in order to receive the entire mass flow between the blades 402, i.e. within the accommodation volumes 404. This would rather be connected with technological challenges since the rotating masses and the torque would be significantly increased. The skilled person will therefore understand that a proper tradeoff between a portion of the moving goods 500 received by the turbine 106 on the one hand and the dimension of the turbine 106 on the other hand shall be made.

Fig. 12 furthermore shows that the turbine 106 is in a mass flow communication with a funnel 1210 for collecting and directing the moving solid goods 500. In other words, the turbine 106 (under consideration of its rotation direction) is located in such a manner with regard to the funnel 1210 (i.e. laterally displaced and partially embedded within the funnel 1210) so that the moving goods 500 are partially and directly inserted into the funnel 1210 and, to another part, are inserted into the accommodation volumes 404 of the turbine 106.

It can be further seen in the velocity plot 810 of Fig. 12 that the moving solid goods 500 arrive with an average velocity (see reference numerals 1202) upstream of the turbine 106. Since the moving goods 500 leave the conveyor belt 1202 at a high vertical position and fall downwardly before interacting with turbine 106, the kinetic energy of the moving goods 500 has a maximum directly upstream of the turbine 106, see reference numeral 1204. After being decelerated by the turbine 106 and the funnel 1210, a minimum kinetic energy and velocity of the moving particles 500 is obtained, compare reference numeral 1206.

In the following, referring to **Fig. 13****,** an energy recovery system 1300 for a better understanding of the invention, will be explained which is also configured for use with a reclaimer. As in the embodiment of Fig. 12, a velocity plot 810 illustrates the velocity profile being quite different in the various states of the moving goods 500 while interacting with the energy recovery system 300, see reference numerals 1302, 1304 and 1306. Fig. 13 shows a turbine 106 with a diameter of3.6 m. Hence, the diameter of the turbine 106 of Fig. 13 is larger than the diameter of the turbine 106 of Fig. 12.

In order to convert more energy of the moving goods 500 into reusable power, the turbine 106 of Fig. 13 is larger than the turbine 106 shown in Fig. 12, so that the accommodation spaces 404 between adjacent blades 402 of the turbine 106 can accommodate a larger portion of the moving goods 500, i.e. a higher mass or volume of the moving goods 500.

In the following, referring to **Fig. 14****,** an energy recovery system 1400 for a better understanding of the invention, will be explained which is also configured for use with a reclaimer. In the energy recovery system 1400, the dimension of the here shown turbine 106 is in between the dimensions of the turbines 106 shown in Fig. 12 and Fig. 13. Hence, the skilled person will understand that the dimension of the turbine 106 is a design parameter for adjusting the amount of recovered energy.

The skilled person will further understand that the shown turbine geometries are merely for illustration purposes and that different turbine geometries are possible and should be configured to the requirements of a specific application. These and other design parameters can be used for increasing, particularly for maximizing, the efficiency factor of the energy conversion system.

However, it should be kept in mind that when the rotating masses become too large, the high forces and torque acting on the components of the energy conversion system, particularly the turbine, become very high. Thus, there should be a tradeoff between recovered energy on the one hand and wear and load acting on the energy recovery system on the other hand. Furthermore, it is an advantage of exemplary embodiments of the invention that an expensive and cumbersome deflection chute (see Fig. 11) can be omitted. Hence, the transfer of the material between the various conveyor belts may be realized with less wear. Concluding, the solid particle turbine may be constituted and designed in such a manner that a significant volume stream can be received between the blades of the turbine, i.e. to a sufficiently high degree, more particularly completely.

In the case of strongly cohesive bulk goods, problems with the emptying of the accommodation volumes at the bottom of the turbine can occur. By a bulk goods specific design of the blades of the turbine in combination with an adaptation of the revolution speed, the range of applications can be extended. The same holds for strongly abrasive bulk goods.

In an embodiment, the rotating axis of the dropping pulley and of the turbine can be parallel to one another. However, it is also possible that the orientation of the rotating axes can be different in order to obtain a further design parameter for optimizing the system.

By the implementation of the solid particle turbine, the implementation of a deflecting chute can be dispensable. The turbine deflects the moving goods in a more gentle way since the rotating good do not experience a sliding deflection as in case of a deflection chute so that also the moving good is prevented from damage. By an appropriate design of the turbine, a gentle, directed transfer of the moving goods from one conveyor unit to another can be realized. The solid particle turbine according to an exemplary embodiment of the invention can also be arranged and configured so that the moving goods can be supplied from the turbine to the downstream conveyor unit with the same velocity (i.e. velocity of the moving goods at a destination transfer position of the turbine is identical to the velocity of the moving goods on the destination conveyor unit). Thus, no further acceleration of the goods to be transported is necessary so that energy consumption and the wear of the apparatus are further reduced.

**Fig. 15** illustrates an energy conversion system 1600 according to an exemplary embodiment of the invention. Again, a velocity plot 810 shows the spatial dependence of the velocity of the moving good 500 along the processing path, see reference numerals 1602, 1604. In this embodiment, the transfer of the moving goods 500 from the turbine 106 to the destination conveyor belt 110 is performed so that the velocity of the moving goods 500 is constant at the destination interface between turbine 106 and the conveyor belt 110. This is achieved in the shown embodiment by a solid body turbine 106 being inclined relative to the destination conveyor belt 110.

**Fig. 16** illustrates an energy conversion system 1650 according to an exemplary embodiment of the invention. Again, a velocity plot 810 shows the spatial dependence of the velocity of the moving good 500 along the processing path, see reference numerals 1652, 1654, 1656. In this embodiment, the turbine is configured as a cross-flow turbine so that the solid goods 500 interacting with the turbine 106 firstly drive a first blade 402 in an upper portion, secondly traverse an interior of the turbine 106 and thirdly drive a second blade 402 in a lower portion of the turbine 106 before leaving the latter. This is a very efficient way of configuring a solid particle turbine, since the energy impact from the solid goods 500 to the turbine 106 is higher (for instance about twice as high) as the energy impact without the described cross-flow.

The cross-flow turbine of Fig. 16, in contrast to the above described embodiments, does not have cup-shaped closed accommodation spaces 404, but instead of this has open, intermediate sections 404' between adjacent blades 402 to enable the cross-flow. Hence, the turbine 106 is a cross-flow turbine having the plurality of blades 402, wherein a plurality of continuously open cross-flow paths are formed between the plurality of blades 402. One of the open cross-flow paths is shown in Fig. 16 with reference numeral 1670.

**Fig. 17** illustrates an energy conversion system 1700 for a better understanding of the invention. Again, a velocity plot 810 shows the spatial dependence of the velocity of the moving good 500 along the processing path, see reference numerals 1702, 1704. In this embodiment, the turbine 106 is configured as an undershot turbine, i.e. the solid goods 500 are supplied at a bottom of the turbine 106 and then leave the turbine 106 also at a bottom of the turbine 106.

**Fig. 18** illustrates a top view and **Fig. 19** illustrates a side view of an energy conversion system 1800 for a better understanding of the invention. Again, a velocity plot 810 shows the spatial dependence of the velocity of the moving good 500 along the processing path, see reference numerals 1802, 1804. Unlike the previously described embodiments (in which the turbines have a horizontal rotation axis, although inclined rotation axes are possible as well), the turbine 106 has a vertical rotation axis 1806. Further, a funnel-shape is provided in energy conversion system 1800.

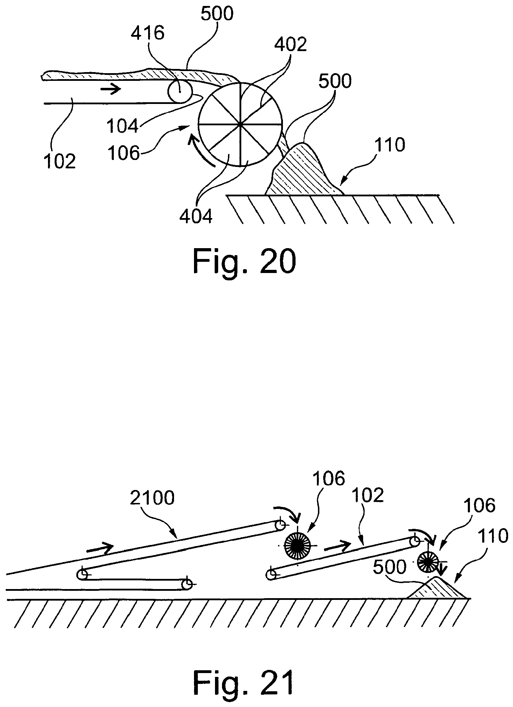

**Fig. 20** illustrates a goods transportation arrangement according to an exemplary embodiment of the invention. In the shown embodiment, the solid goods are supplied to a stockpile (rather than a further conveyor belt) as goods destination unit 110.

**Fig. 21** illustrates a goods transportation arrangement according to an exemplary embodiment of the invention. In this arrangement, the solid goods (not shown along the entire transportation path) are supplied along a path which is indicated by arrows in Fig. 21. The goods transportation arrangement is configured as a stacker and comprises a tripper car 2100 for supplying the solid goods. Subsequently, the solid goods are transferred, via a first turbine 106 for recovering energy from the solid goods, onto a conveyor belt 102 acting as a stacker and being inclined relative to the ground (wherein the conveyor belt 102 is pivotable so as to adjust the inclination angle). Downstream of the conveyor belt 102, the solid goods are transferred, via a second turbine 106 for recovering energy from the solid goods, onto a stockpile 110.

**Fig. 22** illustrates a goods transportation arrangement according to another exemplary embodiment of the invention. In this arrangement, the solid goods (not shown along the entire transportation path) are supplied along a path which is indicated by arrows and which includes a solid goods supplying continuous conveyor 102, an energy-recovering turbine 106, and a solid goods discharging continuous conveyor 110. The continuous conveyors 102, 110 are located with a mutual spatial overlap of size D along a, in the shown scenario horizontal, goods transport direction so as to suppress or even eliminate loss of goods at the handover operation.

The spatial orientation of the continuous conveyor 110 taking off the solid goods 500 can be arranged in any desired way, for instance 90° pivoted relative to the conveyor direction of the conveyor 110 giving up the solid goods 500.

**Fig. 23** illustrates a goods transportation arrangement according to yet another exemplary embodiment of the invention. In this arrangement, the solid goods are supplied by a supply container 2300 with a conically tapering spout 2302. Supply of the solid goods is performed by making use of the gravitational force (see g-vector in Fig. 23). Fig. 23 can be adapted to a discharge scenario from a bunker, a chute, a silo, etc. via a turbine 106 to a continuous conveyor 110 (or to a truck, a ship, a train, etc.).

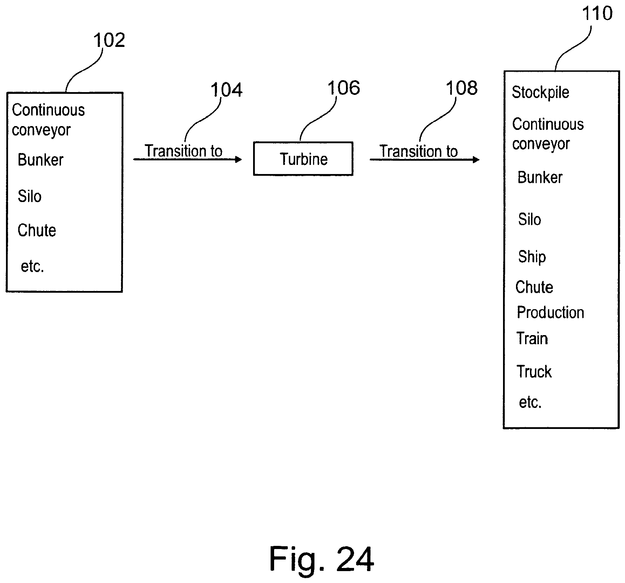

**Fig. 24** illustrates examples of applying embodiments of the invention to various technical scenarios.

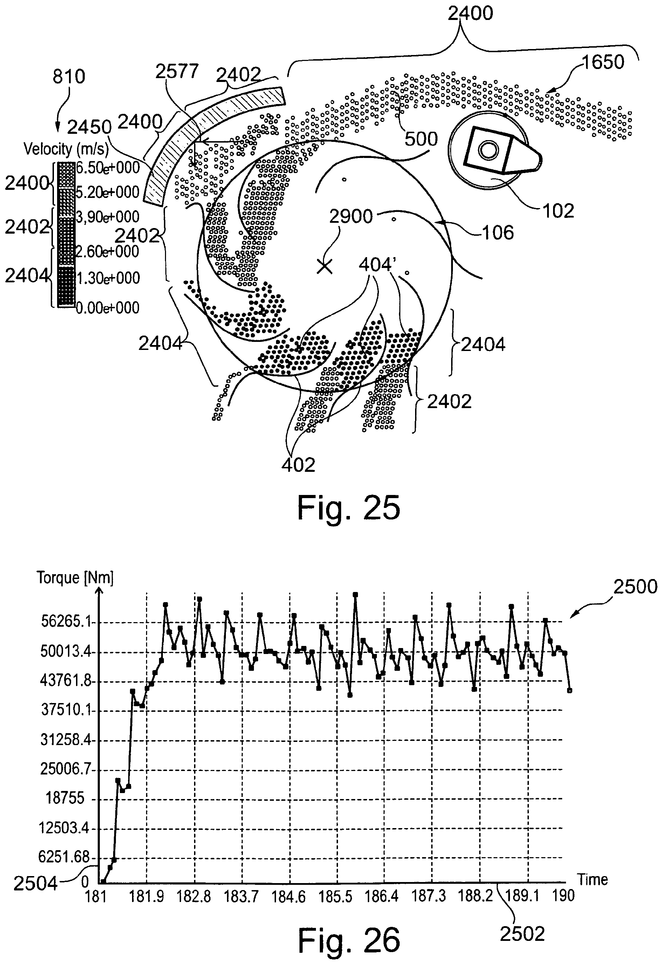

**Fig. 25** illustrates an energy recovering apparatus 1650 with a cross-flow turbine 106 according to yet another exemplary embodiment of the invention. The cross-flow turbine 106 has a horizontal rotation axis 2900, but may be alternatively equipped with a vertical rotation axis 1806 (for instance as in Fig. 19). The energy recovering apparatus 1650 has an arcuate guide plate 2450 arranged and bent laterally along at least a part of an open circumference of the cross-flow turbine 106 to at least partially reflect moving solid goods 500 which laterally leave the cross-flow turbine 106 back into the cross-flow turbine 106 (see arrow 2577). By taking this measure, the yield of the energy recovering apparatus 1650 is increased both in terms of energy recovery and loss of moving goods 500. Again, a velocity plot 810 shows the spatial dependence of the velocity of the moving goods 500 along the processing path, see reference numerals 2400, 2402, 2404.

The selection of a cross-flow turbine 106 for an energy recovering apparatus according to an exemplary embodiment of the invention has the advantage that the moving goods 500 are less prone to leave goods accommodation spaces 404' due to centrifugal force since the moving goods are further transported towards an inner through flow opening of the cross-flow turbine 106. Hence, only a minor portion of the stream of moving goods 500 is forced to unintentionally leave the goods accommodation spaces 404' when the stream of moving goods 500 falls into the individual goods accommodation spaces 404' and is subsequently reflected outwardly. However, this portion may be guided back into the cross-flow turbine 106 by the guide plate 2450.

**Fig. 26** illustrates a diagram 2500 showing a dependency between time (plotted along an abscissa 2502) and torque (plotted along an ordinate 2504) of the energy recovering apparatus 1650 with the cross-flow turbine 106 of Fig. 25.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole.

## Claims

1. An energy recovering apparatus for recovering energy from moving solid goods (500) of a goods transportation arrangement (100), the energy recovering apparatus comprising:
a goods providing interface (104) configured for providing moving solid goods (500) from a solid goods supply unit (102);
a goods forwarding interface (108) configured for forwarding the provided moving solid goods (500) to a solid goods destination unit (110);
a cross-flow turbine (106) arranged downstream of the goods providing interface (104) and upstream of the goods forwarding interface (108) and being configured for being driven by energy of the moving goods (500) so as to recover part of the energy of the moving goods (500),
wherein the cross-flow turbine (106) has a plurality of blades (402),
wherein a continuously open cross-flow path (1670) is formed between the plurality of blades (402), so that the solid goods (500) are provided at the turbine's edge and leave on the opposite side after passing a central part of the turbine.

2. The energy recovering apparatus according to claim 1, wherein the turbine (106) comprises a plurality of blades (402), wherein goods accommodation spaces (404, 404') are delimited between adjacent ones of the plurality of blades (402), the blades (402) being configured for being rotated around a bearing (410) upon supply of the provided moving solid goods (500) to the goods accommodation spaces (404, 404').

3. The energy recovering apparatus according to any of claims 1 or 2, comprising a generator (302) configured for generating electric energy based on energy of the moving goods (500) driving the turbine (106).

4. The energy recovering apparatus according to any of claims 1 to 3, comprising an energy feedback unit (202) to be coupled to the turbine and being configured for supplying the recovered energy to drive at least one of the group consisting of solid goods supply unit (102) and the solid goods destination unit (110).

5. The energy recovering apparatus according to claim 4, wherein the energy feedback unit (202) comprises a kinetic energy coupling system which is:
coupled to a turbine shaft (410) of the turbine (106) being rotated by the moving goods (500); and
to be coupled to a drive shaft (416) for driving at least one of the solid goods supply unit (102) and the solid goods destination unit (110);
so that recovered kinetic energy is transferred from the turbine shaft (410) to the drive shaft (416) via the kinetic energy coupling system.

6. The energy recovering apparatus according to any of claims 1 to 5, comprising a further cross-flow turbine, arranged downstream of the goods providing interface (104) and upstream of the goods forwarding interface (108) and being configured for being driven by energy of a part of the moving goods (500), which part does not drive the turbine (106), so as to recover part of the energy of the part of the moving goods (500);
wherein the turbine (106) and the further turbine (306) are mounted so as to counterrotate to thereby at least partially compensate a torque load.

7. The energy recovering apparatus according to any of claims 1 to 6, wherein the turbine (106) is configured to supply the moving goods (106) with a velocity which is synchronized to a velocity of the solid goods destination unit (110).

8. The energy recovering apparatus according to any of claims 1 to 7, comprising at least one guide structure (2450) arranged laterally along at least a part of an open circumference of the cross-flow turbine (106) to guide back moving solid goods (500) which laterally leave the cross-flow turbine (106) back into the cross-flow turbine (106).

9. A goods transportation arrangement (100) for transporting solid goods (500), the goods transportation arrangement (100) comprising:
an energy recovering apparatus according to any of claims 1 to 8 for recovering energy from solid goods (500) moving along the goods transportation arrangement (100);
the solid goods supply unit (101) configured for supplying the moving solid goods (500) to the goods providing interface (104);
the solid goods destination unit (110) configured for receiving the moving solid goods (500) from the goods forwarding interface (108).

10. The goods transportation arrangement (100) according to claim 9, wherein the solid goods supply unit (102) is a supply continuous conveyor for conveying the solid goods (500) to the energy recovering apparatus and/or
wherein the solid goods destination unit (110) is a destination continuous conveyor for conveying the solid goods (500) away from the energy recovering apparatus.

11. The goods transportation arrangement (100) according to any of claim 9 or 10, wherein the solid goods supply unit (102) is located at a higher vertical level than the solid goods destination unit (110) so that the moving solid goods (500) fall downwardly under the influence of gravity when passing from the solid goods supply unit (102) via the turbine (106) to the solid goods destination unit (110) thereby driving the turbine (106) and/or
wherein the solid goods supply unit (102) is configured to supply the moving goods (500) to the turbine (106) such that at least a part of kinetic energy of the moving goods (500) is transferred to the turbine (106) for driving the turbine (106).

12. The goods transportation arrangement according to any of claims 9 to 11, wherein the solid goods supply unit (2300) is configured to supply the moving goods (500) to the turbine (106) via a container (2300) having a spout (2302) for discharging the solid goods (500) to the turbine (106).

13. The goods transportation arrangement (100) according to any of claims 9 to 12, wherein the turbine (106) is arranged to reduce wear at transfer and discharge points from the solid goods supply unit (101) and/or to the solid goods destination unit (110) and/or at a deflection chute as a result of a smooth and directional transfer of the moving solid goods (500).

14. A method of recovering energy from moving solid goods (500) of a goods transportation arrangement (100), the method comprising:
Providing (104) moving solid goods (500) from a solid goods supply unit (102);
Forwarding (108) the provided moving solid goods (500) to a solid goods destination unit (110);
driving a cross-flow turbine (106), which handles the solid goods (500) between the providing (104) and the forwarding (108), by energy of the moving goods (500) so as to recover part of the energy of the moving goods (500),
wherein the cross-flow turbine (106) has a plurality of blades (402),
wherein a continuously open cross-flow path (1670) is formed between the plurality of blades (402), so that the solid goods (500) are provided at the turbine's edge and leave on the opposite side after passing a central part of the turbine.

## Patentansprüche

1. Eine Energie Rückgewinn Vorrichtung zum Rückgewinnen von Energie von bewegten festen Gütern (500) von einer Güter Transportanordnung (100), wobei die Energie Rückgewinn Vorrichtung aufweist:
ein Güter bereitstellendes Interface (104), welches konfiguriert ist zum Bereitstellen von bewegten festen Gütern (500) von einer festen Güter Zufuhreinheit (102);
ein Güter weiterleitendes Interface (108), welches konfiguriert ist zum Weiterleiten der bereitgestellten bewegten festen Güter (500) zu einer festen Güter Zieleinheit (110);
eine Querstrom Turbine (106), welche angeordnet ist flussabwärts von dem Güter bereitstellenden Interface (104) und flussaufwärts von dem Güter weiterleitenden Interface (108) und welches konfiguriert ist, um angetrieben zu werden von Energie von den bewegten Gütern (500), um so einen Teil von der Energie der bewegten Güter (500) rückzugewinnen,
wobei die Querstrom Turbine (106) eine Mehrzahl von Blättern (402) hat,
wobei ein kontinuierlich offener Querflusspfad (1670) geformt ist zwischen der Mehrzahl von Blättern (402), sodass die festen Güter (500) bereitgestellt sind an dem Turbinenrand und diesen verlassen auf der entgegengesetzte Seite nach einem Passieren eines zentralen Teils von der Turbine.

2. Die Energie Rückgewinn Vorrichtung gemäß Anspruch 1, wobei die Turbine (106) eine Mehrzahl von Blättern (402) aufweist, wobei Güter Unterbringungsplätze (404, 404') begrenzt sind zwischen benachbarten von einer Mehrzahl von Blättern (402), wobei die Blätter (402) konfiguriert sind, um rotiert zu werden um ein Lager (410) nach einer Zufuhr von den bereitgestellten bewegten festen Gütern (500) zu den Güter Unterbringungsplätzen (404, 404').

3. Die Energie Rückgewinn Vorrichtung gemäß irgendeinem der Ansprüche 1 oder 2, aufweisend
ein Generator (302), welcher konfiguriert ist zum Generieren elektrischer Energie basierend auf Energie der bewegten Güter (500), welche die Turbine (106) antreiben.

4. Die Energie Rückgewinn Vorrichtung gemäß irgendeinem der Ansprüche 1 bis 3, aufweisend
eine Energie Rückkoppeleinheit (202), welche zu der Turbine zu koppeln ist und welche konfiguriert ist zum Zuführen der rückgewonnenen Energie zum Antreiben zumindest einen von einer Gruppe bestehend aus der festen Güter Zuführeinheit (102) und der festen Güter Zieleinheit (110).

5. Die Energie Rückgewinn Vorrichtung gemäß Anspruch 4, wobei die Energie Rückkoppeleinheit (202) ein kinetische Energie Koppelungssystem aufweist, welches ist:
gekoppelt zu einer Turbinenwelle (410) von der Turbine (106), welche rotiert durch die bewegten Güter (500); und
zu koppeln zu einer Antriebswelle (416) zum Antreiben zumindest eine von der festen Güter Zuführeinheit (102) und der festen Güter Zieleinheit (110); sodass rückgewonnene kinetische Energie transferiert wird von der Turbinenwelle (410) zu der Antriebswelle (416) via das kinetische Energie Koppelungssystem.

6. Die Energie rückgewinnende Vorrichtung gemäß irgendeinem der Ansprüche 1 bis 5, aufweisend
eine weitere Querstrom Turbine, welche angeordnet ist flussabwärts von dem Güter bereitstellenden Interface (104) und flussaufwärts von dem Güter weiterleitenden Interface (108) und welche konfiguriert ist, um angetrieben zu werden von Energie von einem Teil von den bewegten Gütern (500), welcher Teil nicht die Turbine antreibt, um so rückzugewinnen einen Teil von der Energie von dem Teil von den bewegten Gütern (500);
wobei die Turbine (106) und die weitere Turbine (306) montiert sind, um gegenläufig gedreht zu sein zum dadurch zumindest teilweise Kompensieren einer Drehmomentlast.

7. Die Energie rückgewinnende Vorrichtung gemäß Anspruch 1 bis 6, wobei die Turbine (106) konfiguriert ist zum Zuführen der bewegten Güter (106) mit einer Geschwindigkeit, welche synchronisiert ist zu einer Geschwindigkeit von der festen Güter Zieleinheit (110).

8. Die Energie rückgewinnende Vorrichtung gemäß irgendeinem der Ansprüche 1 bis 7, aufweisend
zumindest eine Führungsstruktur (2450), welche seitlich angeordnet ist entlang zumindest eines Teiles von einem offenen Umfang von der Querstrom Turbine (106) zum Führen zurück von bewegten festen Gütern (500), welche seitlich die Querstrom Turbine (106) verlassen, zurück in die Querstrom Turbine (106).

9. Eine Güter Transportanordnung (100) zum transportieren fester Güter (500), wobei die Güter Transportanordnung (100) aufweist:
eine Energie Rückgewinn Vorrichtung gemäß irgendeinem der Ansprüche 1 bis 8 zum Rückgewinnen von Energie von festen Gütern (500), welche sich entlang der Güter Transportanordnung (100) bewegen;
die feste Güter Zuführeinheit (101), welche konfiguriert ist zum Zuführen der bewegten festen Güter (500) zu dem Güter bereitstellenden Interface (104);
die feste Güter Zieleinheit (110), welche konfiguriert ist zum Empfangen der bewegten festen Güter (500) von dem Güter weiterleitenden Interface (108).

10. Die Güter Transportanordnung (100) gemäß Anspruch 9, wobei die feste Güter Zuführeinheit (102) ein kontinuierliches Zuführförderband ist zum Fördern der festen Güter (500) zu der Energie rückgewinnenden Vorrichtung ist und/oder,
wobei die feste Güter Zieleinheit (110) ein kontinuierliches Zielförderband zum Fördern der festen Güter (500) weg von der Energie rückgewinnenden Vorrichtung ist.

11. Die Güter Transportanordnung (100) gemäß irgendeinem von Anspruch 9 oder 10, wobei die feste Güter Zuführeinheit (102) positioniert ist auf einem höheren vertikalen Level als die feste Güter Zieleinheit (110), sodass die bewegten festen Güter (500) herab fallen unter dem Einfluss der Gravitation, wenn diese passieren von der festen Güter Zuführeinheit (102) via die Turbine (106) zu der festen Güter Zieleinheit (110), wodurch die Turbine angetrieben wird und/oder,
wobei die feste Güter Zuführeinheit (102) konfiguriert ist zum Zuführen der bewegten Güter (500) zu der Turbine (106), sodass zumindest ein Teil der kinetischen Energie von dem bewegten Gütern (500) transferiert wird zu der Turbine (106) zum Antreiben der Turbine (106).

12. Die Güter Transportanordnung gemäß irgendeinem der Ansprüche 9 bis 11, wobei die feste Güter Zuführeinheit (2300) konfiguriert ist zum Zuführen der bewegten Güter (500) zu der Turbine (106) via einen Behälter (2300), welcher einen Auslauf (2302) hat zum Entladen der festen Güter (500) zu der Turbine (106).

13. Die Güter Transportanordnung (100) gemäß irgendeinem der Ansprüche 9 bis 12, wobei die Turbine (106) angeordnet ist zum Reduzieren von Abnutzung an Transferpunkten und Entladepunkten von der festen Güter Zuführeinheit (101) und/oder zu der festen Güter Zieleinheit (110) und/oder an einer Ableitungsrinne als ein Ergebnis von einem reibungslosen und direkten Transfer von den bewegten festen Gütern (500).

14. Ein Verfahren zum Rückgewinnen von Energie von bewegten festen Gütern (500) von einer Güter Transportanordnung (100), wobei das Verfahren aufweist:
Bereitstellen (104) von bewegten festen Gütern (500) von einer festen Güter Zuführeinheit (102);
Weiterleiten (108) der bereitgestellten bewegten festen Güter (500) zu einer festen Güter Zieleinheit (110);
Antreiben einer Querstrom Turbine (106), welche die festen Güter (500) handhabt zwischen dem Bereitstellen (104) und dem Weiterleiten (108) durch Energie von den bewegten Gütern (500), um rückzugewinnen einen Teil von der Energie von den bewegten Gütern (500),
wobei die Querstrom Turbine (106) eine Mehrzahl von Blätter (402) hat,
wobei ein kontinuierlich offener Querstrompfad (1670) geformt ist zwischen der Mehrzahl von Blättern (402), sodass die festen Güter (500) bereitgestellt sind an dem Turbinenrand und diesen verlassen auf der entgegengesetzten Seite nach einem Passieren eines zentralen Teils von der Turbine.

## Revendications

1. Appareil de récupération d'énergie pour récupérer l'énergie de produits solides en mouvement (500) d'un agencement de transport de produits (100), l'appareil de récupération d'énergie comprenant :
une interface de fourniture de produits (104) configurée pour fournir des produits solides en mouvement (500) d'une unité d'amenée de produits solides (102) ;
une interface d'avance de produits (108) configurée pour faire avancer les produits solides en mouvement fournis (500) à une unité de destination de produits solides (110) ;
une turbine à flux transversal (106) agencée en aval de l'interface de fourniture de produits (104) et en amont de l'interface d'avance de produits (108) et étant configurée pour être entraînée par de l'énergie des produits en mouvement (500) de façon à récupérer une partie de l'énergie des produits en mouvement (500),
dans lequel la turbine à flux transversal (106) a une pluralité de pales (402),
dans lequel un trajet de flux transversal ouvert en continu (1670) est formé entre la pluralité de pales (402), de sorte que les produits solides (500) sont disposés au bord de la turbine et sortent sur le côté opposé après avoir passé une partie centrale de la turbine.

2. Appareil de récupération d'énergie selon la revendication 1, dans lequel la turbine (106) comprend une pluralité de pales (402), dans lequel des espaces de logement de produits (404, 404') sont délimités entre des pales adjacentes de la pluralité de pales (402), les pales (402) étant configurées pour être entraînées en rotation autour d'un palier (410) lors de l'amenée des produits solides en mouvement fournis (500) aux espaces de logement de produits (404, 404').

3. Appareil de récupération d'énergie selon l'une quelconque des revendications 1 ou 2, comprenant un générateur (302) configuré pour générer de l'énergie électrique sur la base de l'énergie des produits en mouvement (500) entraînant la turbine (106).

4. Appareil de récupération d'énergie selon l'une quelconque des revendications 1 à 3, comprenant une unité de retour d'énergie (202) à coupler à la turbine et étant configurée pour amener l'énergie récupérée à entraîner au moins un du groupe constitué d'une unité d'amenée de produits solides (102) et de l'unité de destination de produits solides (110).

5. Appareil de récupération d'énergie selon la revendication 4, dans lequel l'unité de retour d'énergie (202) comprend un système de couplage d'énergie cinétique qui est :
couplé à un arbre de turbine (410) de la turbine (106) étant entraîné en rotation par les produits en mouvement (500) ; et
à coupler à un arbre d'entraînement (416) pour entraîner au moins une parmi l'unité d'amenée de produits solides (102) et l'unité de destination de produits solides (110) ;
de sorte que l'énergie cinétique récupérée est transférée de l'arbre de turbine (410) à l'arbre d'entraînement (416) via le système de couplage d'énergie cinétique.

6. Appareil de récupération d'énergie selon l'une quelconque des revendications 1 à 5, comprenant une autre turbine à flux transversal, agencée en aval de l'interface de fourniture de produits (104) et en amont de l'interface d'avance de produits (108) et étant configurée pour être entraînée par de l'énergie d'une partie des produits en mouvement (500), laquelle partie n'entraîne pas la turbine (106), de façon à récupérer une partie de l'énergie de la partie des produits en mouvement (500) ;
dans lequel la turbine (106) et l'autre turbine (306) sont montées de façon à effectuer une contre-rotation pour compenser ce faisant au moins partiellement une charge de couple.

7. Appareil de récupération d'énergie selon l'une quelconque des revendications 1 à 6, dans lequel la turbine (106) est configurée pour amener les produits en mouvement (106) à une vitesse qui est synchronisée à une vitesse de l'unité de destination de produits solides (110).

8. Appareil de récupération d'énergie selon l'une quelconque des revendications 1 à 7, comprenant au moins une structure de guidage (2450) agencée latéralement le long d'au moins une partie d'une circonférence ouverte de la turbine à flux transversal (106) pour guider en arrière des produits solides en mouvement (500) qui sortent latéralement de la turbine à flux transversal (106) en arrière dans la turbine à flux transversal (106).

9. Agencement de transport de produits (100) pour le transport de produits solides (500), l'agencement de transport de produits (100) comprenant :
un appareil de récupération d'énergie selon l'une quelconque des revendications 1 à 8 pour récupérer de l'énergie de produits solides (500) en mouvement le long de l'agencement de transport de produits (100) ;
l'unité d'amenée de produits solides (101) configurée pour amener les produits solides en mouvement (500) à l'interface de fourniture de produits (104) ;
l'unité de destination de produits solides (110) configurée pour recevoir les produits solides en mouvement (500) de l'interface d'avance de produits (108).

10. Agencement de transport de produits (100) selon la revendication 9, dans lequel l'unité d'amenée de produits solides (102) est un transporteur continu d'amenée pour transporter les produits solides (500) à l'appareil de récupération d'énergie et/ou
dans lequel l'unité de destination de produits solides (110) est un transporteur continu de destination pour éloigner les produits solides (500) de l'appareil de récupération d'énergie.

11. Agencement de transport de produits (100) selon l'une quelconque des revendications 9 ou 10, dans lequel l'unité d'amenée de produits solides (102) est située à un niveau vertical plus élevé que l'unité de destination de produits solides (110) de sorte que les produits solides en mouvement (500) tombent vers le bas sous l'effet de gravité lorsqu'ils passent de l'unité d'amenée de produits solides (102) à l'unité de destination de produits solides (110) via la turbine (106) entraînant ce faisant la turbine (106) et/ou
dans lequel l'unité d'amenée de produits solides (102) est configurée pour amener les produits en mouvement (500) à la turbine (106) de sorte qu'au moins une partie de l'énergie cinétique des produits en mouvement (500) est transférée à la turbine (106) pour entraîner la turbine (106).

12. Agencement de transport de produits selon l'une quelconque des revendications 9 à 11, dans lequel l'unité d'amenée de produits solides (2300) est configurée pour amener les produits en mouvement (500) à la turbine (106) via un récipient (2300) ayant un bec (2302) pour évacuer les produits solides (500) à la turbine (106).

13. Agencement de transport de produits (100) selon l'une quelconque des revendications 9 à 12, dans lequel la turbine (106) est agencée pour réduire l'usure aux points de transfert et d'évacuation de l'unité d'amenée de produits solides (101) et/ou à l'unité de destination de produits solides (110) et/ou un niveau d'une goulotte de déflexion résultant d'un transfert en douceur et directionnel des produits solides en mouvement (500).

14. Procédé de récupération d'énergie de produits solides en mouvement (500) d'un agencement de transport de produits (100), le procédé comprenant :
la fourniture (104) de produits solides en mouvement (500) d'une unité d'amenée de produits solides (102) ;
l'avancée (108) des produits solides en mouvement fournis (500) à une unité de destination de produits solides (110) ;
l'entraînement d'une turbine à flux transversal (106), qui traite les produits solides (500) entre la fourniture (104) et l'avancée (108), par de l'énergie des produits en mouvement (500) de façon à récupérer une partie de l'énergie des produits en mouvement (500),
dans lequel la turbine à flux transversal (106) a une pluralité de pales (402),
dans lequel un trajet de flux transversal ouvert en continu (1670) est formé entre la pluralité de pales (402), de sorte que les produits solides (500) sont disposés au bord de la turbine et sortent sur le côté opposé après avoir passé une partie centrale de la turbine.
